# EUROPEAN PATENT SPECIFICATION

(11) **EP 2 667 697 B1**
(45) Date of publication and mention of the grant of the patent: **08.04.2015**
(21) Application number: 12702470.1
(22) Date of filing: 24.01.2012
(51) Int. Cl.: A01G 1/06, A01G 9/12

(54) **GRAFT ELEMENT, SYSTEM AND METHOD FOR JOINING PLANT STEM SECTIONS USING SUCH GRAFT ELEMENT, AND SYSTEM AND METHOD FOR PREPARING SUCH GRAFT ELEMENT**
PFROPFELEMENT, SYSTEM UND VERFAHREN ZUR VERBINDUNG VON PFLANZENSTÄNGELABSCHNITTEN UNTER VERWENDUNG EINES DERARTIGEN PFROPFELEMENTS SOWIE SYSTEM UND VERFAHREN ZUR HERSTELLUNG EINES DERARTIGEN PFROPFELEMENTS
ÉLÉMENT, SYSTÈME ET PROCÉDÉ DE GREFFAGE POUR ASSEMBLER DES MORCEAUX DE TIGE DE PLANTE EN UTILISANT CET ÉLÉMENT, SYSTÈME ET PROCÉDÉ POUR PRÉPARER CET ÉLÉMENT DE GREFFAGE

(30) Priority: 24.01.2011 NL 1038539
(43) Date of publication of application: 04.12.2013
(73) Proprietor: IG Specials B.V., 5311 PC Gameren (NL)
(72) Inventor: STRUIJK, Wim, NL-5316 BG Delwijnen (NL); VAN DER EL, Wim, NL-4233 HN Ameide (NL); DE KONING, Dirk Jan, NL-5691 LX Son En Breugel (NL); SCHOUTEN, Willem Nicolaas, NL-5317 NH Nederhemert (NL)
(74) Representative: den Hartog, Jeroen H.J.
(86) International application number: PCT/EP2012/051067
(87) International publication number: WO 2012/101134

(56) References cited:
- WO-A1-2007/144399
- WO-A1-2009/113864
- DE-B3-102005 040 996
- FR-A1- 2 693 623
- GB-A- 2 455 085
- US-A- 3 050 905
- US-A- 4 071 930
- US-A- 5 979 110
- US-A1- 2010 205 862

## Description

### Field of the invention

The invention relates to a graft element for joining together plant stem sections. The invention further relates to a system and a method for preparing such graft element. Finally, the invention relates to a system and a method for joining together plant stem sections, preferably by means of such graft element.

### Background of the invention

It is well known in the fields of horticulture and fruit that a plant section of a preferred species of plant may be transplanted onto a section of a hardier species. The plant will then grow, having the qualities of the preferred species while enjoying benefits such as resistance to disease of the hardy species. The plant section of the preferred species to be grafted is referred to as the scion. The section of the hardy plant onto which the scion is grafted is generally referred to as root stock.

For certain types of plant species grafting is systematic. Almost every rose plant consists of a scion of a selected species grafted onto a hardy root stock. Grape vines are also generally grafted. The process of grafting normally involves selecting appropriate scion and root stock sections, cutting the sections, e.g. on a perpendicular or diagonal angle, and bringing the faces of the graft together. The process of grafting is generally labor intensive.

The graft must then be held or supported sufficiently to allow the two sections to grow into one another. Furthermore, the graft should, where necessary, be protected from the environment to prevent infection or damage. A conventional graft element used to hold the two sections together is a clothes peg, which applies pressure to the graft. However, such pegs are relatively heavy for small plants, in particular non-woody plants, and each peg is relatively expensive. Furthermore, the overall success rate is low, which leads to considerable wastage of plants, labor and space.

FR2693623 discloses a clip formed of an elastic material for grafting purposes. The clip is in the form of a slotted tube that can be opened and closed around a stem. The clip can also receive a supporting element, such as a stick or splint, which may assist in supporting the graft. The clip is considerably lighter than a clothes peg and more suited for use on soft-stemmed plants such as tomato plants. Nevertheless, individual placement of such clips by hand remains time consuming and can encourage the spread of plant diseases.

WO95/21520 discloses the use of a reliable sleeve for grafting purposes. The sleeve is formed of an elastic material. The sleeve is initially in the form of a ring and is subsequently rolled out to cover the graft. Although the sleeve appears to be an improvement over the use of a clothes peg, its manufacture and deployment are relatively complex.

Other examples of prior art graft elements suitable for manual deployment can be found in Japanese patent document JP2008263878.

US-patent 3,050.905 describes a method and means for fixing a graft in a stock. The fixing means is an open-sided clip having tabs or wings disposed so as, under finger pressure, to facilitate engagement of the clip around a stock.

GB-patent application 455085 describes a clip comprising a resiliently deformable split ring. An end of the split ring is provided with a tab and the other end is provided with a hole having a ratchet mechanism to provide closure.

International patent application WO2007/144399 describes a grafting element for automated grafting of plant sections. The grafting element comprises an expanded tube that can be caused to contract both radially and axially onto the graft.

### Summary of the invention

In the light of the problems associated with the prior art, it would be desirable to provide an alternative procedure for grafting. There is in particular a need for a grafting device that can simply and efficiently perform grafting on relatively soft-stemmed plants. There is furthermore a need for a graft element that is easily applied and can support and protect the graft during the time taken for the graft to heal and can subsequently be removed rather easily. The grafting procedure should be swift and simple to carry out while ensuring good graft success.

For this purpose, an embodiment of the invention provides a graft element for joining together plant stem sections, the graft element being made of a resilient material and taking the form of a tubular structure having a hollow center that extends in a longitudinal direction of the graft element so as to form a cylinder, the graft element further comprising: a side opening along its length which is connected to the hollow center over the entire length of the graft element; and two elongated members at opposite sides of the side opening and oriented substantially parallel thereto, the elongated members being provided with cutouts for receiving a gripping unit. The graft element can be easily applied without damaging the plants stems. Furthermore, the graft provides sufficient support to keep the graft in place. The use of a resilient material allows the graft to adjust its form to the stems that it encloses. Furthermore, if the form of the graft element has been adjusted for placement of the stems in the graft element, the use of a resilient material allows the graft element to enclose the stems and to return to its basic shape, as much as possible. The side opening allows superfluous liquid produced by the root stock to escape from the graft in a relatively easy way, which precludes rotting of stems, and thus improves the quality of the grafting process.

The cutouts of the elongated members may take the form of grooves, e.g. wedge-shaped grooves, or tubes.

In some embodiments, the cylinder has a substantially circular cross-section. Such cross-section is easy to manufacture and can be applied for the grafting of many types of plants.

In some embodiments the width of the side opening close to the inner surface of the cylinder is smaller than the width near the outer surface of the graft element. In some further embodiments thereof, the cross-sectional shape of the side opening is substantially wedge-shaped. The use of this type of side opening allows for a relatively large surface area that can be used to keep the graft in place, while liquid being produced by the root stock can be removed relatively easy.

Embodiments of the invention further relate to a method for joining together plant stem sections by means of a graft element as described above. The method comprises: providing a graft element by means of a gripping apparatus comprising two gripping units provided with extended portions, the gripping units being arranged for holding the graft element and controllably opening the side opening against a repelling force of the resilient material; providing a stem of a root stock to be grafted; providing a stem of a scion to be grafted; and positioning the stems of the root stock and the scion in the graft element by pushing the stems through the side opening by means of a stem positioning device so as to allow the formation of a graft.

Embodiments of the invention further relate to a system for joining together plant stem sections by means of a graft element as described above. The system comprises: a gripping apparatus comprising two gripping units provided with extended portions, the gripping units being arranged for holding the graft element and controllably opening the side opening against a repelling force of the resilient material; a root stock holding apparatus for providing a stem of a root stock to be grafted; a scion holding apparatus for providing a stem of a scion to be grafted; and a stem positioning device for positioning the stems of the root stock and the scion in the graft element by pushing the stems through the side opening so as to allow the formation of a graft.

In some embodiments, the stem positioning device comprises a pushing unit for pushing the stems towards the graft element, the pushing unit having an orientation substantially perpendicular to the main orientation of the stems. The pushing unit has the effect that the stem are directed further in a direction towards the graft element. For even further improvement of the stem positions within the graft element, the stem positioning unit may further comprise a pressing unit for applying pressure to the stems at a predetermined position, wherein the pressing unit is oriented substantially perpendicular to the pushing unit and independently moveable thereof. The predetermined position may be the center portion of the graft element.

Embodiments of the invention further relate to a method for preparing the graft element as described above. The method comprises: supplying a strand of graft element material; gripping a portion of the strand; and cutting the strand so that the graft element is formed. Preferably, the strand is supplied in a substantially horizontal fashion. Horizontal supply of the strand allows for more reliable and precise cutting as the supply is relatively independent of gravity.

In some embodiments gripping is performed by a gripping apparatus comprising a graft element supporting unit having a supporting surface for supporting the strand portion, and two gripping units provided with extended portions with a shape complementary to the elongated members of the graft element to be formed, wherein the method further comprises moving the elongated members away from each other so that the strand portion is effectively clamped on the supporting surface.

Embodiments of the invention further relate to a system for preparing the graft element as described above. The system comprises: a supply unit for supplying a strand of graft element material; a gripping apparatus for gripping a portion of the strand; and a cutting device for cutting the strand so that the graft element is formed.

In some embodiments, the gripping apparatus comprises: a graft element supporting unit having a supporting surface for supporting the strand portion; and two gripping units provided with extended portions with a shape complementary to the elongated members of the graft element to be formed; wherein the gripping units are arranged to move the elongated members away from each other so that the strand portion is effectively clamped on the supporting surface.

Preferably, the supporting surface is a concave surface having a curvature that is smaller than the curvature of the backside of the strand portion. The use of such surface may ensure that the strand portion is effectively clamped during the cutting executed by the cutting device.

Embodiments of the invention further relate to a method for joining together plant stem sections by means of a graft element, the method comprising: providing a stem of a root stock to be grafted, the root stock stem comprising a root stock end for receiving the scion stem; providing a stem of a scion to be grafted, the scion stem comprising a scion end for receiving the root stock stem; positioning the stems next to each other such that the root stock end is positioned higher than the scion end; cutting the stems at a level between the root stock end and the scion end with a single movement; positioning the stems of the root stock and the scion on top of each other; and providing a graft element around the cut stems.

Cutting the stems with a single movement may be executed with a cutting blade that cuts the stems at an angle between 0° and 60° with a direction substantially perpendicular to the orientation of the stems. The most suitable cutting angle may vary per type of plant to be grafted.

Embodiments of the invention further relate to a system for joining together plant stem sections by means of a graft element, the system comprising: a root stock holding apparatus for providing a stem of a root stock to be grafted, the root stock stem comprising a root stock end for receiving the scion stem; a scion holding apparatus for providing a stem of a scion to be grafted, the scion stem comprising a scion end for receiving the root stock stem; a control unit for controlling the root stock holding apparatus and the scion holding apparatus for positioning the stems next to each other such that the root stock end is positioned higher than the scion end; a cutting unit; and an apparatus for providing the graft element; wherein the cutting unit is arranged for cutting the stems with a single movement at a level between the root stock end and the scion end and wherein the control unit is further arranged for controlling the root stock holding apparatus and the scion holding apparatus for positioning the stems of the root stock and the scion on top of each other after cutting.

The cutting unit may comprise a cutting blade with an orientation at an angle between 0° and 60° with a direction substantially perpendicular to the orientation of the stems to be cut.

### Brief description of the drawings

Various aspects of the invention will be further explained with reference to embodiments shown in the drawings wherein:
FIG. 1A schematically shows a graft element according to an embodiment of the invention;
FIG. 1B schematically shows a graft element according to another embodiment of the invention;
FIGS. 2A - 2C show three different elevated views of an embodiment of a graft element preparation system for preparing the graft element of FIG. 1;
FIG. 3 shows a more detailed view on the cutting device within the preparation system of FIGS. 2A - 2C;
FIGS. 4A - 4C schematically show a top view of a graft element preparation procedure executed with a graft element preparation device;
FIGS. 5A, 5B show an elevated view of an arrangement for performing a graft application procedure according to an embodiment of the invention at two different stages within the procedure;
FIG. 6A schematically shows a side view of the stem positioning device;
FIG. 6B schematically shows a side view of the gripping units holding the graft element;
FIGS. 7A - 7H schematically show different stages of the graft element application procedure;
FIG. 8 schematically show a side view of a plant provided with a graft element after usage after the procedure of FIGS. 7A - 7H;
FIG. 9A schematically shows an elevated side view of a system for joining together plant stem sections according to an embodiment of the invention;
FIG. 9B schematically shows a side view of a portion of the system of FIG. 9A;
FIG. 9C schematically shows a top view of a gripping unit for holding a stem section;
FIGS. 10A - 10C schematically show an elevated side view of a portion of the system of FIG. 9A at different stages of joining together plant stem sections;
FIG. 10D schematically shows a side view of the system of FIG. 9A when a graft has been formed; and
FIGS. 11A-11C schematically show different views on an arrangement for cutting stem sections according to an embodiment of the invention.

### Description of illustrative embodiments

The following is a description of various embodiments of the invention, given by way of example only and with reference to the drawings.

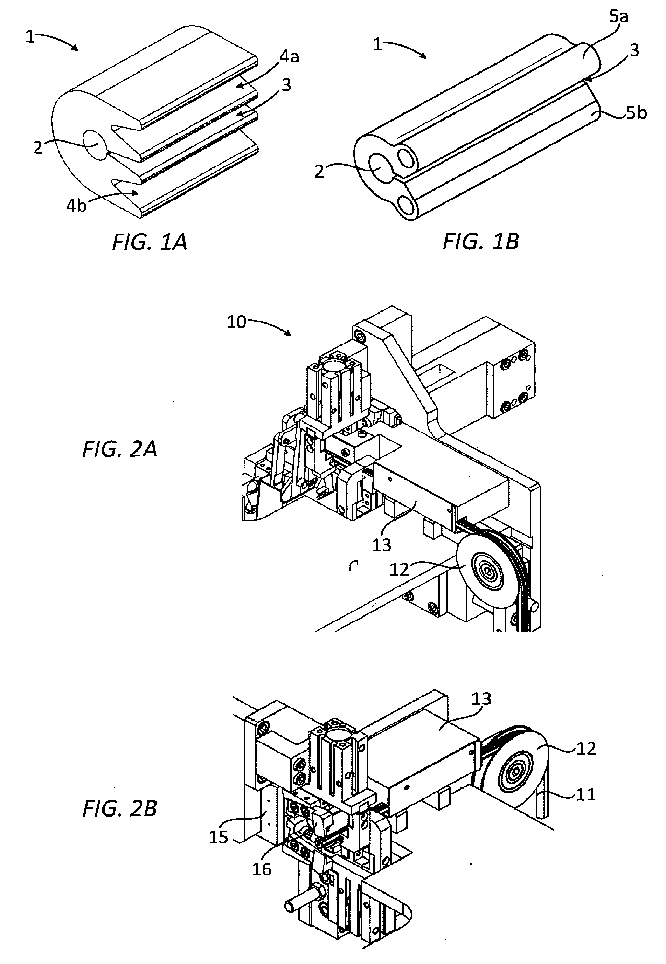

FIGS. 1A, 1B both schematically show a graft element 1 according to an embodiment of the invention. The graft element 1 is made of a resilient material, for example an elastomeric material such as silicone. More examples of suitable materials include, but are not limited to, low-density polyethylene (LDPE), a thermoplastic elastomer (TPE) and a liquid silicone rubber (LSR). Preferably, the length of the graft element is such that it provides sufficient support at the excess of as little material as possible. A typical length of the graft element 1 is about 6 - 16 mm, preferably about 8-14 mm, more preferably about 10-12 mm. For example, for tomato plants a size of 12 mm turns out to provide good results.

The graft element **1** takes the form of a tubular structure having a hollow center that extends in a longitudinal direction of the graft element so as to form a cylinder **2.** The expression "cylinder" throughout this description refers to a structure having two substantially parallel ends of similar cross-sectional size and shape connected with each other over a distance that is greater than the dimensions of the cross-section at the ends.

The graft element **1** further comprises a side opening **3** along its length, which side opening **3** is connected to the cylinder **2.** As a result the outer surface of the graft element **1** is connected to the inner surface of the cylinder **2** over the entire length of the graft element **1.** The side opening **3** is preferably narrow close to the center cylinder **2** and becomes wider while moving radially outwards. For example, the cross-sectional shape of the side opening may be substantially wedge-shaped.

The cylinder **2** is arranged to allow insertion of a cut stem of a root stock through the side opening **3** such that the stem of the root stocks extends through one end of the cylinder **2.** The cylinder **2** is further arranged to allow insertion of the cut stem of a scion through the side opening **3** such that the stem of the scion extends through an opposite end of the cylinder **2.** The dimensions of the cylinder **2** are such that they substantially coincide with the smallest of the dimensions of the stem of the root stock and the dimensions of the stem of the scion. These dimensions ensure that the graft element **1** applies pressure on the graft that is formed.

Preferably, the cross-sectional shape of the cylinder **2** substantially corresponds to the shape of the cross-sectional shape of the stems to be grafted. As many stems have substantially circular shape, such shape is preferably used for the cross-sectional shape of the cylinder **2.** A circular shape has the advantage that pressure forces are equally spread over the inner surface of the cylinder. Furthermore, due to the substantially circular shape pressure forces are directed radially inwards, which improves the stability of the graft. Note that cylinders **2** with a non-circular cross-section, such as a cross-section having a shape of an ellipse, a rectangle, a square, or another multi-angle shape such as a hexagonal or octagonal shape, may also be used, particularly in case the stems have a corresponding non-circular shape as well.

The side opening **3** is not only of use during the graft application procedure, as will be discussed in more detail below, but also allows moisture to escape from the graft after placement. This appears to lower the chance that stems deteriorate.

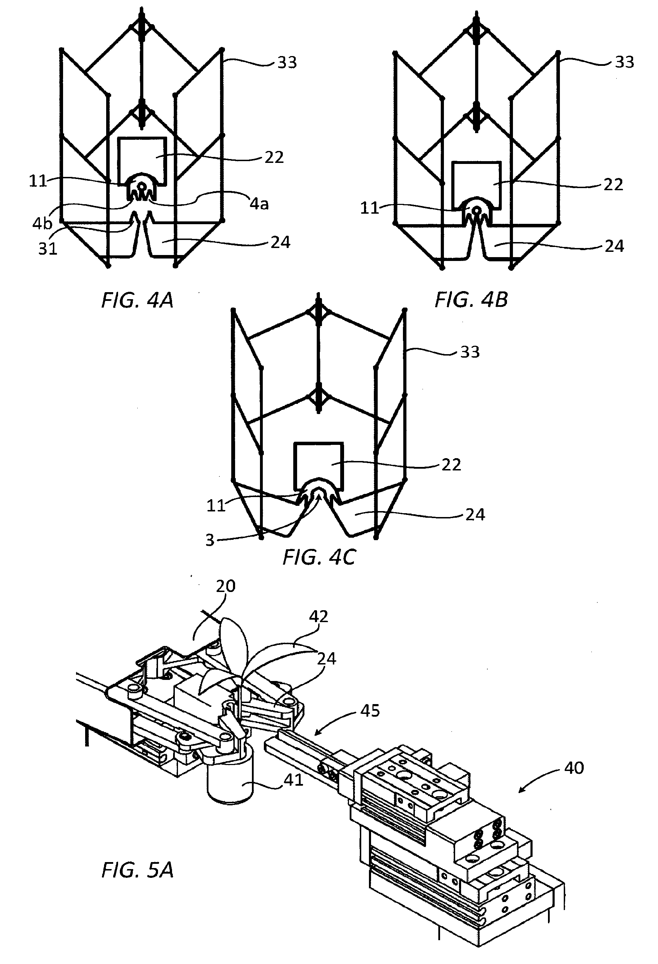

Furthermore, the graft element **1** is provided with two elongated members at opposite sides of the side opening **3** and oriented substantially parallel thereto. The elongated members are provided with cutouts for receiving a gripping unit as will be discussed with reference to FIGS. 4A-4C.

In FIG. 1A, the cutouts of the elongated members take the form of grooves **4a, 4b.** In the case the cutouts take the form of grooves **4a, 4b,** the cross-sectional shape of the grooves **4a, 4b** is preferably substantially wedge shaped as shown in FIG. 1A, but different shapes are feasible as well.

In FIG. 1B, the cutouts of the elongated members take the form of tubes **5a, 5b.**

The side of the graft element **1** at which the side opening **3** and the elongated members are located will further be referred to as front side. The other side will be referred to as backside. Embodiments of the invention will further be described with reference to the embodiment of the graft element **1** shown in FIG. 1A.

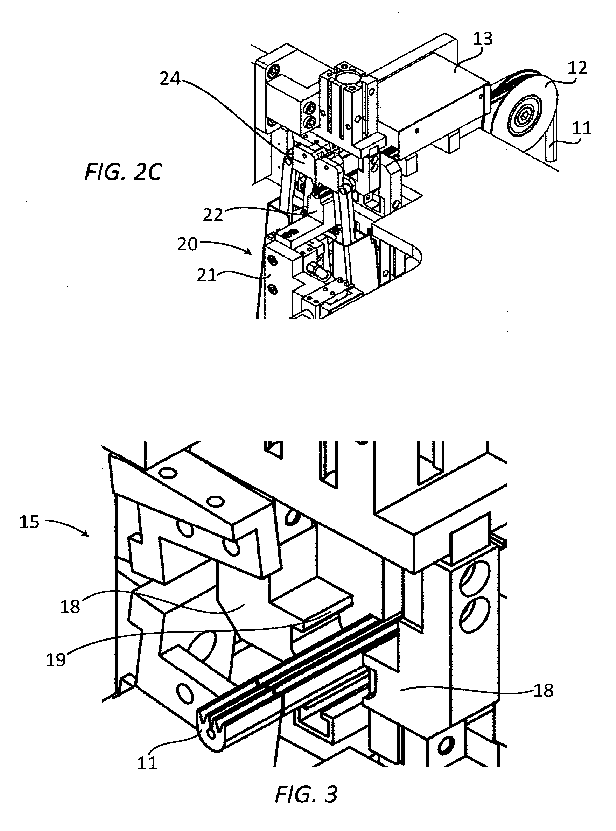

FIGS. 2A - 2C schematically show three different elevated views of an embodiment of a graft element preparation system **10** for preparing the graft element of FIG. 1A. The preparation unit **10** comprises a strand supply unit (not shown) for supplying a strand **11** or string of material from which grafts elements are to be made. The strand supply unit may take the form of a coil around which the strand is winded. The strand of graft element material has a shape similar to the graft element with the exception that the strand is of much greater length. The strand may be guided, for example via a pulley **12** and a guiding unit **13,** towards a graft element gripping apparatus **20** that cooperates with a cutting device **15.** The guiding unit may take the form of a U-shaped surface opposite of which a plate is positioned. The backside of the graft element to be formed is then guided while sliding over the U-shaped surface, while the plate fits into the opening and ensures that the strand **11** does not rotate during supply movement.

Preferably, as shown in FIGS. 2A - 2C the strand **11** is provided to the gripping apparatus **20** horizontally. The expression "horizontal" corresponds to a direction substantially perpendicular to the direction of the force of gravity. Horizontal supply has the advantage that the supply can be controlled more easily as tension forces within the strand **11** caused by gravity have less influence.

The cutting device **15** comprises one or more cutting blades **16** for cutting the strand 11 of graft element material. The length of the graft element can be pre-programmed aimed at the specific type of plant to be handled, or may be steered by the computer controlling the grafting, and may be dependent on the specific graft to be covered by the graft element **1.**

The graft element gripping apparatus **20** comprises a body **21** connected to a graft element supporting unit **22** and two gripping units **24.** The graft element gripping apparatus **20** further comprises a controllable framework that enables the gripping units **24** to move in a lateral direction, as well as enables the gripping units **24** to rotate with respect to each other.

The cutting device **15** and the graft element gripping apparatus 20 cooperate in such a way that that graft elements **1** as discussed with reference to FIGS. 1A, 1B may be formed.

FIG. 3 shows an elevated view of the cutting device in which the cutting blades **16** have been removed for clarity. As shown in FIG. 3, the cutting device **15** comprises securing units **18** for securing the strand **11** during cutting. The securing units **18** are arranged to move towards each other in a substantially horizontal direction in case the strand **11** needs to be cut. The outer shape of each securing unit **18** comprises an extended portion **19** with a height slightly lower than the height of the strand **11.** The extended portion **19** is forced over the strand **11** and effectively secures the position of the strand **11.** By securing the strand **11** movement during cutting is kept to a minimum which enables accurate and reliable cutting.

FIGS. 4A - 4C schematically show a top view of a graft element preparation procedure that can be performed with the graft element preparation system **10** shown in FIGS. 2A-2C. In this procedure use is made of the graft element gripping apparatus **20.**

As schematically shown in FIGS. 4A - 4C each gripping unit **24** is provided with an extended portion, further referred to as beak **31.** The beaks **31** have a shape that is complementary to or matches the size and shape of the elongated members of the graft element **1** to be prepared. For example, in case of tubes **5a, 5b** the elongated members may comprise a pin that fits into the tubes. In case of grooves **4a, 4b,** as will be discussed below, the extended portions are about the same in size and shape as the size and shape of the grooves **4a, 4b** alongside the side opening of the graft element material strand **11.** The controllable framework for controlling movement of the gripping units **24** is schematically shown, and denoted by reference numeral **33.**

In FIG. 4A, the strand **11** of graft element material rests on top of graft element supporting surface of the graft element supporting unit **22.** The surface shape is concave. Preferably, the curvature of the surface is smaller than the curvature of the backside surface of the strand **11** of graft element material. The thickness of the supporting unit **22** (in FIG. 4A a dimension perpendicular to the paper plane), at least at the position where the graft element material is to be placed, is of about the same length as the graft element **1** that is to be prepared. The same holds for the beaks **31,** and preferably the gripping units **24.** The graft element material is provided by means of the strand supply unit, for example by allowing movement of the strand by unwinding a coil to release a strand of graft element material with appropriate length, e.g. 12 mm.

After placement of the strand **11** of graft element material on the concave surface of the supporting unit **22,** the griping units **24** are moved towards the supporting so that the extended portions **31** of the gripping units **24** fit into the grooves **4a, 4b** of the graft element material strand **11.** This situation is schematically shown in FIG. 4B.

The gripping units **24** are then rotated with respect to each other by suitable controlled movement so that the grooves **4a, 4b** move away from each other. As a result, the side opening **3** expands so that the center portion of the graft element material strand **11** becomes more easily accessible via the side opening **3.** This situation is schematically shown in FIG. 4C. Furthermore, due to the outward movement of the grooves **4a, 4b** the curvature of the backside of the strand **11** has decreased. Preferably, the outward movement is such that the resulting curvature of the backside of the strand **11** is substantially the same as the curvature of the concave surface of the supporting unit **22.** In such case the outer surface of the graft element material strain is in full contact with the supporting surface of the graft element supporting unit, and the strand **11** is clamped effectively to the supporting unit **22.**

For this reason, the graft element strand **11** is cut preferably at this stage by the cutting device **15** (not shown). The cutting device separates the portion of the graft element material that is supported by the supporting unit **22** of the gripping apparatus **20** from the remainder of the graft element material strand **11.** As a result, a grafting element **1** of predetermined length is formed.

The graft element preparation system described above has the advantage that graft elements can be prepared on the spot, without the need of complex sorting and pick-up techniques. Furthermore, preparation is reliable, reproducible, and the system components are easy to maintain.

After formation the gripping apparatus **20** moves the graft element **1** towards a location at which the graft element is applied to a root stock and scion to form a graft. This movement may include a translational movement, a rotational movement or both.

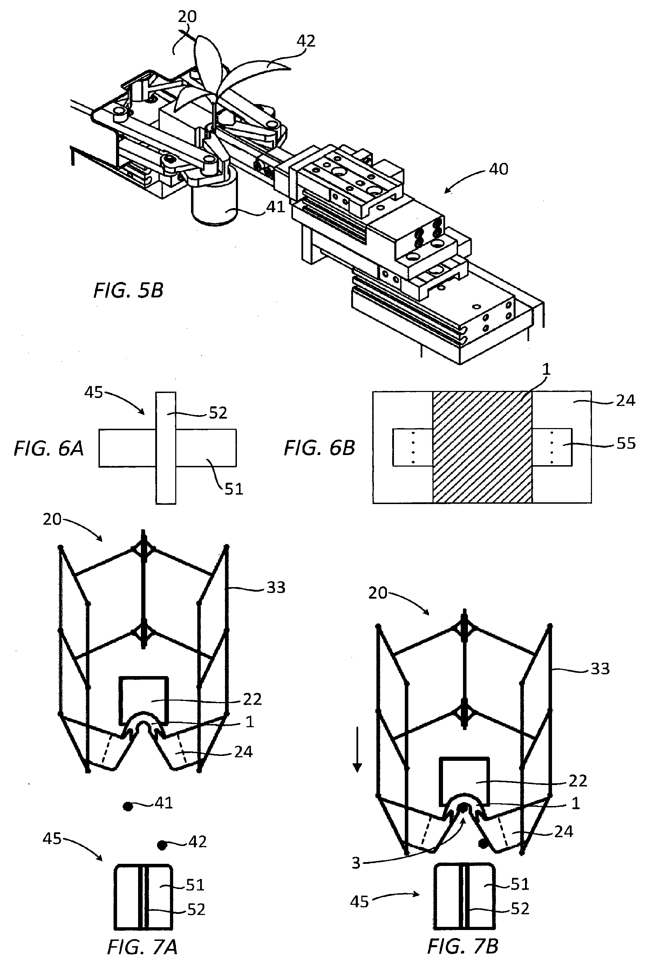

FIGS. 5A, 5B show an elevated view of an arrangement for performing a graft application procedure according to an embodiment of the invention at two different stages within the procedure. In FIGS. 5A, 5B, the gripping apparatus **20** has made a rotational movement over about 90 degrees. As a result, the graft element 1 has a substantially vertical orientation. The expression "vertical" corresponds to a direction that substantially corresponds with the direction of the force of gravity. It should be understood that the 90 degrees movement in a vertical plane is of course just a design choice. The supply of the graft element can be vertical, and the rotational movement may be rotational 45 degrees, 90 degrees or 180 degrees in a horizontal plane. Other designs can be thought of as well.

FIG. 5A shows a situation prior to application of the graft. The gripping apparatus **20** has positioned the graft element in the vicinity of a root stock **41** and a scion **42** to be joined together. The root stock **41** and the scion **42** are supported by respective supporting units. The supporting units are not shown in FIGS. 5A, 5B to limit the complexity of the drawings. The gripping apparatus **20** is further positioned such that the opening within the graft element **11** created by the gripping units **24** faces a stem positioning device **45** that is part of the graft application apparatus **40.**

FIG. 5B schematically shows the situation in which the stem positioning device **45** has arranged placement of the stem of the root stock **41** and the stem of the scion **42** in the graft element held by gripping units **24.**

FIG. 6A schematically shows a side view of the stem positioning device **45** as seen from the graft element **11** at the stage shown in FIG. 5A. The stem positioning device **45** comprises main body, further referred to as pushing unit **51,** and a pressing unit **52.** The pressing unit **52** is oriented substantially perpendicular to the main orientation of the pushing unit **51** and can move independently thereof. Further details with respect to the orientation of the stem positioning device **45** in general and the pushing unit **51** and pressing unit **52** in particular will be discussed with reference to FIGS. 7A - 7H.

FIG. 6B schematically shows a side view of the gripping units **24** holding the graft element **1** as seen from the stem positioning device **45** at the stage shown in FIG. 5A. The gripping units **24** comprise inner slits **55** for at least partly accommodating the pushing unit **51** of the stem positioning device **45.** Furthermore, preferably, the pressing unit **52** is aligned with the center of the graft element **1.** Further details with respect to the cooperation of gripping apparatus **20** and stem positioning device **45** will be discussed with reference to FIGS. 7A - 7H.

FIGS. 7A - 7H schematically show different stages of the graft element application procedure using the set up shown in FIGS. 5A, 5B.

In FIG. 7A the starting point is shown. The graft element **1** held by the gripping units **24** faces the pushing unit **51** of the stem positioning device **45** with the stems of the root stock **41** and the scion **42** in between.

Subsequently, the gripping apparatus **20** is moved towards the stems **41, 42** so that both stems are captured in the space between the gripping units **24.** This situation is shown in FIG. 7B and resembles the situation shown in FIG. 5A. In this particular case, one stem **41** is already positioned within the center of the graft element **1** while the other stem **42** remains outside the area covered by the graft element **1.** Note that it is not essential that one stem is already positioned within the center of the graft element **1** at this stage of the procedure. The stems **41, 42** merely need to be captured so that they are located within the space between the gripping units **24.**

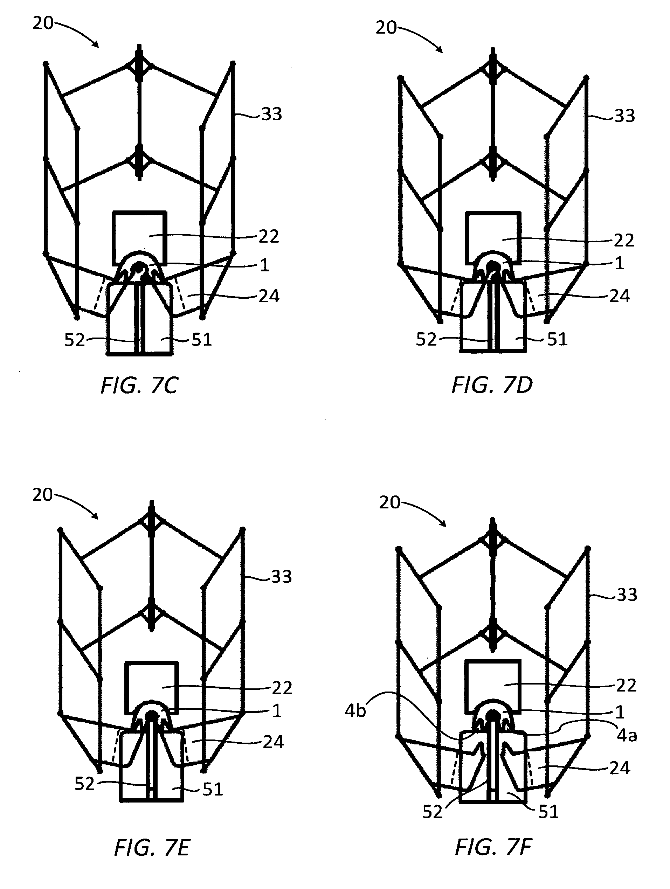

Next, as shown in FIG. 7C, the pushing unit **51** is moved towards the graft element **1.** The pushing unit **51** slides through the slits **55** (boundaries depicted by dashed lines) of the gripping units **24** which ensures that the stem **42** is pushed towards the center of the graft element **1.** Preferably, the dimensions of the pushing unit **51** and the slits **55** are designed to leave minimal space available between the two. Such minimal space avoids the risk of a portion of the stem getting stuck between the pushing unit **51** and the gripping unit **24** which would damage the stem.

Preferably, at this stage, the beaks **31** of the gripping units **24** rotate slightly towards each other, for example over about 8 degrees, which allows the opening **3** of the graft element **1** to decrease, and pushes the stems **41, 42** further inwards, an effect schematically shown in FIG. 7D. The opening of the graft element **1** is preferably such that the pressing unit **52** can just pass through.

Of course it is alternatively possible to perform movement of the pushing unit **51** as explained with reference to FIG. 7C and the inward rotation of the beaks **31** as explained with reference to FIG. 7D in an alternating and stepwise fashion to obtain the same result.

Now, as shown in FIG. 7E, the pressing unit **52** is moved through the opening **3** of the graft element 1 to push the stems so that both stems align with respect to each other in the center portion of the graft element **1.**

At this stage, the gripping units **24** release the graft element **1** by removing the beaks **31** from the grooves **4a, 4b.** The pressure applied by the pressing unit **52** keeps the stems **41, 42** in place with respect to the graft element **1.**

Subsequently, the gripping apparatus **20** may move away from the graft element **1** as schematically shown in FIG. 7F.

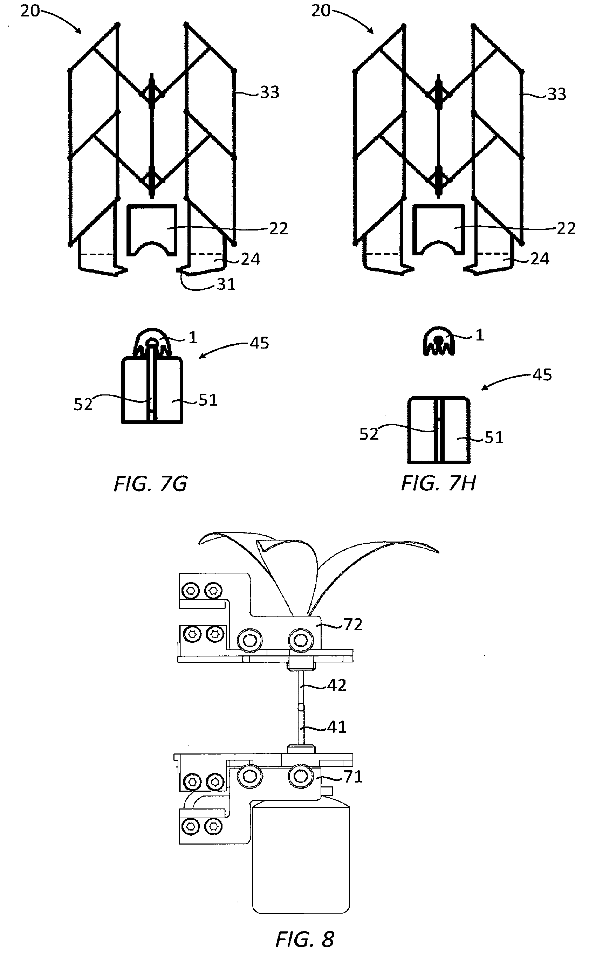

Then the pressing unit **52** is retracted. Preferably the pushing unit **51** maintains its position to avoid any undesirable movement of the graft element **1,** which results in the situation shown in FIG. 7G.

Finally, as shown in FIG. 7H, both the pushing unit **51** and the pressing unit **52** are retracted leaving the two stems **41, 42** provided with the graft element **1** thus forming a graft.

Instead of the sequence shown in FIGS. 7F-7H, alternative retractions procedures may be executed. For example, first the pressing unit **52** may be retracted followed by further closure of the opening angle by the gripping units **24.** Then the pushing unit **51** may be retracted, followed by release of the graft element **1** by the beaks **31,** and subsequent retraction by the gripping apparatus **20.**

FIG. 8 schematically show a side view of a plant provided with a graft element **1** after usage after the procedure of FIGS. 7A - 7H. The graft element **1** effectively joins together the stem of the root stock **41** with the stem of the scion **42.** In FIG. 8 the grafted plant, which stem sections could have been held by the root stock holding apparatus **71** and the scion holding apparatus **72** during the grafting process, may now be supported by a separate support member (not shown) underneath the root stock **41.** Such support member may be movable, for example within a carrousel or on top of a conveyor belt. It must be understood that other ways of support are possible as well.

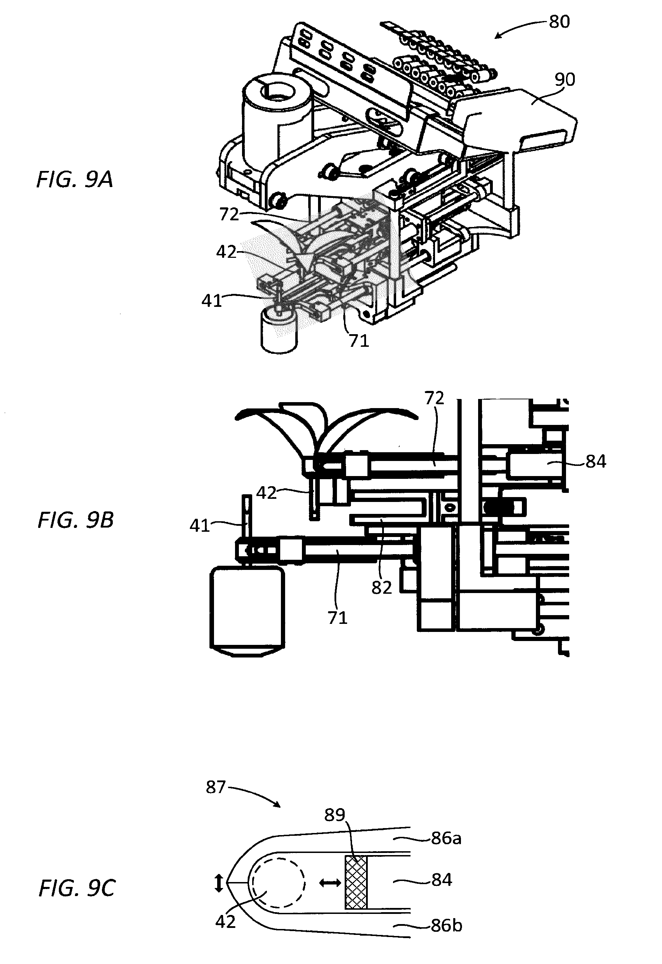

FIG. 9A schematically shows an elevated side view of a system **80** for joining together plant stem sections according to an embodiment of the invention. As shown in FIG. 9A, the system **80** comprises a root stock holding apparatus **71,** a scion holding apparatus **72,** a control unit **90** for controlling the holding apparatuses **71, 72.** In addition, the system **80** comprises a cutting unit, and an apparatus for providing a graft element.

FIG. 9B schematically shows a side view of a portion of the system of FIG. 9A. The shown portion shows the root stock holding apparatus **71** holding a stem of a root stock **41** to be grafted and a scion holding apparatus holding a stem of a scion **42** to be grafted. Both stems **41, 42** are held in a substantially upright, i.e. vertical, position. Both stems are preferably pre-cut. For this purpose, the system may comprise a pre-cutting assembly for cutting at least one of the root stock stem **71** and the scion stem **72** prior to the method of joining stem sections discussed below.

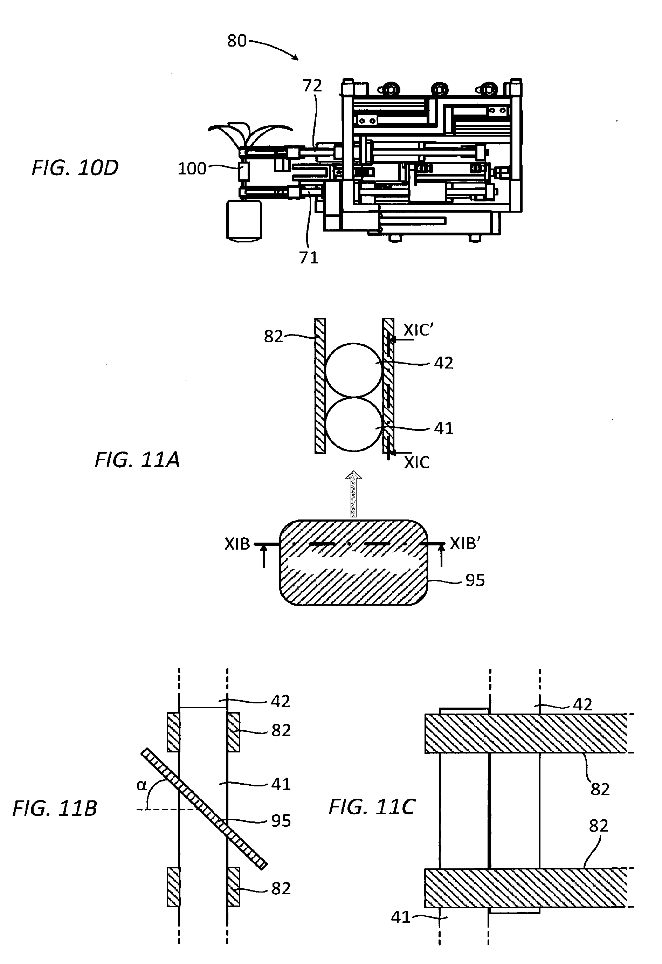

The control unit **85** is arranged for controlling the root stock holding apparatus **71** and the scion holding apparatus **72** with respect to each other. In the embodiment shown in FIG. 9B, the scion holding apparatus **72** is moveable in a substantially horizontal direction using cylinder **84.** The extent to which the scion holding apparatus **72** can move is limited due to the limited size of cylinder **84.** An embodiment of a portion of a scion holding apparatus 72 that may be used in embodiments of the invention is shown in and discussed with reference to FIG. 9C. The system **80** further comprises a stem adjustment device for centering the stems **41, 42** in a direction substantially perpendicular to the drawing plane. In other words, the stem adjustment device **82** may limit sideway movement of the stems **41, 41.** Positioning the stems **41, 42** in a line that is substantially parallel to the holding elements of the holding apparatuses 71, **72** improves cutting accuracy. The alignment of the stems **41, 42** with respect to each other in certain directions is more predictable and the cutting unit can anticipate such alignment. In particular, the stem adjustment device **82** may comprise to leaf springs that can be oriented with respect to each other in an open position and a closed position. While in the closed position, the leaf springs clamp the stems **41, 42** in a predictable way. Further details with respect to an embodiment of the stem adjustment device **82** will be shown with reference to FIGS. 11A-11C.

FIG. 9C schematically shows a top view of portion of a holding apparatus, in this exemplary embodiment the scion holding apparatus **72.** Hereafter, reference is made to the term " gripping unit **87"** to refer to the shown portion. The gripping unit **87** comprises two gripping elements **86a, 86b** forming beaks at their ends. The gripping elements **86a, 86b** can move towards and away from each other, for example under the control of control unit **90,** such that the beaks may be in an open or closed position. A stem **42** is placed between the gripping elements **86a, 86b** while being spaced apart, after which the gripping elements **86a, 86b** are moved towards each other until their ends meet and the scion stem **42** is protruding through a slit-shaped aperture. The gripping unit **87** further comprises a central pressing member **88** provided with a resilient end portion **89.** The pressing member **88** is arranged to move along the length of the slit-shaped aperture, thereby decreasing or increasing the cross-sectional area of the aperture. In particular, after placement of a stem **42** between the gripping elements **86a, 86b** so that the stem **42** protrudes through the aperture, the pressing member **88** may be moved, for example under control of control unit **90,** towards the stem **42** until stem **42** is effectively clamped between the end portion **89** of the pressing member **88** and the inner surface of the gripping elements **86a, 86b.** When the scion stem **42** is effectively clamped, the control unit may instruct the scion holding apparatus **72** to move the clamped stem **42** towards the root stock stem **41** held by the root stock holding apparatus **71.**

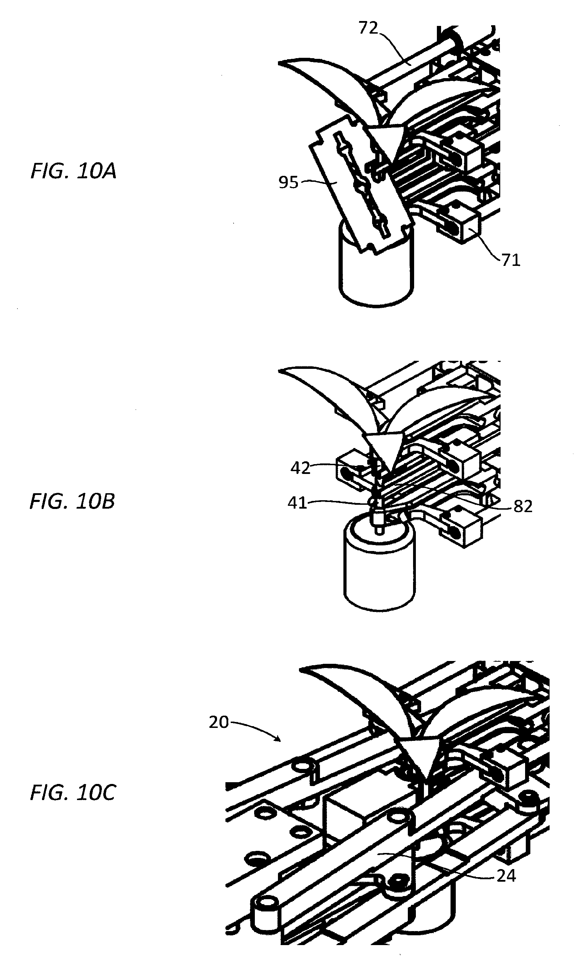

FIGS. 10A - 10C schematically show an elevated side view of a portion of the system of FIG. 9A at different stages of joining together plant stem sections. In FIG. 10A, the root stock stem **41** and the scion stem **42** are positioned next to each other by movement of the scion holding apparatus **72** towards the root stock holding apparatus **71** holding the root stock stem **41.** Preferably, the scion stem **42** is moved towards the root stock stem **41** until the scion stem **41** contacts the root stock stem **42.** The stems **41, 42** are further positioned such that the root stock end hanging downwards is positioned at a higher level than the scion end facing upwards. In FIG. 10A, the stems **41, 42** are about to be cut with a cutting blade **95** that is part of a cutting unit. The cutting blade **95** cuts the stems **41, 42** in a single movement at a height level between the root stock end and the scion end. By cutting both stems **41, 42** in a single cutting movement the ends of both stems are cut with the same orientation. Consequently, both cut ends fit very accurately on top of each other. Due to this close fit, the graft accuracy is improved, which may result in an increased chance that the graft is executed successfully. Preferably, both stems **41, 42** are cut under an angle with the horizontal, i.e. at an angle with the direction substantially perpendicular to the main orientation of the stems **41, 42.** The angle of the cutting blade **95** is preferably adjustable. The most suitable cutting angle may vary on the type of plant that is to be grafted. The angle is preferably between 0° and 60° with the direction substantially perpendicular to the main orientation of the stems **41, 42..**

In FIG. 10B the cut ends of the cut root stock stem **41** and the cut scion stem **72** are positioned on top of each other. In an embodiment, both holding apparatuses **71, 72** comprise a gripping unit similar to gripping unit **87** shown in FIG. 9C. The scion holding apparatus **72** is movable as described above, whereas the root stock holding apparatus **71** has a fixed position. The extent to which the scion stem **72** can be moved, e.g. by suitably dimensioning the cylinder **84,** may then be designed such that the position of the inner surface of the beaks of the scion holding apparatus **72** in fully extended position are aligned with the position of the inner surface of beaks in closed position of the root stock holding apparatus **71.**

Thereafter, as shown in FIG. 10C, a graft element **100** is provided around the cut stem ends **41, 42,** thereby forming a graft. The graft element **100** may be a graft element **1** as described with reference to FIGS. 1A or 1B. In such case, as shown in FIG. 10C, the apparatus for providing the graft element may comprise a gripping apparatus **20** comprising two gripping units **24** provided with extended portions. The gripping units **24** are then arranged for holding the graft element and controllably opening the side opening **3** of the graft element **1** against a repelling force of the resilient material.

FIG. 10D shows a side view of the system **80** with the end result, a scion grafted onto a root stock using a graft element **100.**

FIGS. 11A-11C schematically show different views on an arrangement for cutting stem sections according to an embodiment of the invention. FIG. 11A shows a top view of the stems **41, 42,** and a cutting blade **95** that is part of the cutting unit and arranged for cutting the stems **41, 42** in a single cutting movement.

FIG. 11B shows a side view of the arrangement of FIG. 11A along the line XIB-XIB' in FIG. 11A while looking in the direction of the arrows. The cutting blade **95** is arranged to cut the stems at an angle α. Preferably, the angle α is between 0° and 60° with a direction substantially perpendicular to the orientation of the stems **41, 42.** The most suitable angle α may depend on the type of plant to be grafted.

FIG. 11C shows a side view of the arrangement of FIG. 11A along the line XIC-XIC' while looking in the direction of the arrows. As already discussed with reference to FIG. 10A, FIG. 11C shows that the root stock end extends above the scion end. The cutting blade **95** is arranged to cut both stems at a level between both ends. The cutting of both stems **41, 42** in a single movement ensures that both stems **41, 42** have cut stem ends with the same orientation. Consequently, the cut stems fit very well onto each other.

The invention has been described by reference to certain embodiments discussed above. It will be recognized that these embodiments are susceptible to various modifications and alternative forms well known to those of skill in the art without departing from the spirit and scope of the invention. Accordingly, although specific embodiments have been described, these are examples only and are not limiting upon the scope of the invention, which is defined in the accompanying claims.

## Claims

1. Graft element (1) for joining together plant stem sections, the graft element being made of a resilient material and taking the form of a tubular structure having a hollow center that extends in a longitudinal direction of the graft element so as to form a cylinder (2), the graft element further comprising:
- a side opening (3) along its length which is connected to the hollow center over the entire length of the graft element; and
- two elongated members at opposite sides of the side opening and oriented substantially parallel thereto, the elongated members being provided with cutouts;
wherein the side opening is expandable under the influence of gripping units that fit into the cutouts.

2. Graft element according to claim 1, wherein the cutouts of the elongated members take the form of grooves (4a, 4b), the grooves preferably being substantially wedge-shaped.

3. Graft element according to any one of the preceding claims, wherein the width of the side opening close to the inner surface of the cylinder is smaller than the width near the outer surface of the graft element.

4. Method for joining together plant stem sections by means of a graft element (1) according to any one of the preceding claims, the method comprising:
- providing a graft element by means of a gripping apparatus (20) comprising two gripping units (24) provided with extended portions (31), the gripping units (24) being arranged for holding the graft element and controllably opening the side opening (3) against a repelling force of the resilient material;
- providing a stem (41) of a root stock to be grafted;
- providing a stem (42) of a scion to be grafted; and
- positioning the stems of the root stock and the scion in the graft element by pushing the stems through the side opening (3) by means of a stem positioning device (45) so as to allow the formation of a graft.

5. Method according to claim 4, wherein the method further comprises keeping the stems at a predetermined position by applying pressure to the stems by means of the stem positioning device.

6. Method according to claim 4 or 5, wherein the stems are positioned next to each other such that the root stock end is positioned higher than the scion end, the method further comprising:
- cutting the stems at a level between the root stock end and the scion end and positioning the stems of the root stock and the scion on top of each other; and
- providing a graft element around the cut stems.

7. Method according to claim 6, wherein cutting the stems is executed with a cutting blade that cuts the stems at an angle between 0° and 60° with a direction substantially perpendicular to the orientation of the stems.

8. System for joining together plant stem sections by means of a graft element (1) according to any one of claims 1-3, the system comprising:
- a gripping apparatus (20) comprising two gripping units (24) provided with extended portions (31) the gripping units (24) being arranged for holding the graft element and controllably opening the side opening (3) against a repelling force of the resilient material;
- a root stock holding apparatus (71) for providing a stem (41) of a root stock to be grafted;
- a scion holding apparatus (72) for providing a stem (42) of a scion to be grafted; and
- a stem positioning device (45) for positioning the stems of the root stock and the scion in the graft element by pushing the stems through the side opening (3) so as to allow the formation of a graft.

9. System according to claim 8, wherein the stem positioning device comprises a pushing unit (51) for pushing the stems, the pushing unit having an orientation substantially perpendicular to the main orientation of the stems.

10. System according to claim 9, wherein the stem positioning unit further comprises a pressing unit (52) for applying pressure to the stems at a predetermined position, wherein the pressing unit is oriented substantially perpendicular to the pushing unit and independently moveable thereof.

11. System according to any one of claims 8-10, wherein the root stock stem (41) comprises a root stock end for receiving the scion stem (42), and the scion stem (42) comprises a scion end for receiving the root stock stem (41), the system further comprising:
- a control unit for controlling the root stock holding apparatus (71) and the scion holding apparatus (72) for positioning the stems next to each other such that the root stock end is positioned higher than the scion end; and
- a cutting unit;
wherein the cutting unit is arranged for cutting the stems at a level between the root stock end and the scion end and wherein the control unit is further arranged for controlling the root stock holding apparatus (71) and the scion holding apparatus (72) for positioning the stems of the root stock and the scion on top of each other after cutting.

12. System according to claim 11, wherein the cutting unit comprises a cutting blade with an orientation at an angle between 0° and 60° with a direction substantially perpendicular to the orientation of the stems to be cut.

13. Method for preparing the graft element (1) of any one of claims 1-3, the method comprising:
- supplying a strand (11) of graft element material;
- gripping a portion of the strand; and
- cutting the strand so that the graft element is formed.
wherein the gripping is performed by a gripping apparatus comprising a graft element supporting unit having a supporting surface for supporting the strand portion, and two gripping units provided with extended portions with a shape complementary to the elongated members of the graft element to be formed, wherein the method further comprises moving the elongated members away from each other so that the strand portion is effectively clamped on the supporting surface.

14. System (10) for preparing the graft element (1) of any one of claims 1-3, the system comprising:
- a supply unit for supplying a strand (11) of graft element material;
- a gripping apparatus (20) for gripping a portion of the strand; and
- a cutting device (15) for cutting the strand so that the graft element is formed.
wherein the gripping apparatus comprises:
- a graft element supporting unit having a supporting surface for supporting the strand portion; and
- two gripping units (24) provided with extended portions (31) with a shape complementary to the elongated members of the graft element to be formed;
wherein the gripping units are arranged to move the elongated members away from each other so that the strand portion is effectively clamped on the supporting surface.

15. System according to claim 14, wherein the supporting surface is a concave surface having a curvature that is smaller than the curvature of the backside of the strand portion.

## Patentansprüche

1. Pfropfelement (1) zum Verbinden von Pflanzenstängelabschnitten, wobei das Pfropfelement aus einem elastischen Material besteht und die Form einer in der Mitte hohlen, röhrenartigen Struktur aufweist, die sich in einer Längsrichtung des Pfropfelements erstreckt und einen Zylinder (2) bildet, wobei das Pfropfelement weiterhin umfasst:
- eine in Längsrichtung verlaufende Seitenöffnung (3), die über die gesamte Länge des Pfropfelements mit dem hohlen Mittelbereich verbunden ist; und
- zwei längliche Elemente auf gegenüberliegenden Seiten der Seitenöffnung, die im Wesentlichen parallel dazu ausgerichtet sind, wobei die länglichen Elemente mit Ausschnitten versehen sind;
wobei die Seitenöffnung unter dem Einfluss von Greifeinheiten, die in die Ausschnitte passen, dehnbar ist.

2. Pfropfelement gemäß Anspruch 1, wobei die Ausschnitte der länglichen Elemente die Form von Rillen (4a, 4b) aufweisen, wobei die Rillen vorzugsweise im Wesentlichen keilförmig sind.

3. Pfropfelement gemäß einem der vorstehenden Ansprüche, wobei die Breite der Seitenöffnung in der Nähe der Innenfläche des Zylinders geringer ist als die Breite in der Nähe der Außenfläche des Pfropfelements.

4. Verfahren zum Verbinden von Pflanzenstängelabschnitten mittels eines Pfropfelements (1) gemäß einem der vorstehenden Ansprüche, wobei das Verfahren umfasst:
- Bereitstellen eines Pfropfelements mittels einer Greifvorrichtung (20), die zwei Greifeinheiten (24) umfasst, welche mit ausgedehnten Teilen (31) versehen sind, wobei die Greifeinheiten (24) so angeordnet sind, dass sie das Pfropfelement halten und die Seitenöffnung (3) gegen eine Widerstandskraft des elastischen Materials gezielt öffnen können;
- Bereitstellen eines Stängels (41) einer zu bepfropfenden Unterlage;
- Bereitstellen eines Stängels (42) eines aufzupfropfenden Edelreises; und
- Positionieren der Stängel der Unterlage und des Edelreises in dem Pfropfelement durch Schieben der Stängel durch die Seitenöffnung (3) mittels einer Stängelpositioniervorrichtung (45), um die Bildung eines Pfröpflings zu ermöglichen.

5. Verfahren gemäß Anspruch 4, wobei das Verfahren weiterhin das Halten der Stängel auf einer vorbestimmten Position durch Ausüben von Druck auf die Stängel mittels der Stängelpositioniervorrichtung umfasst.

6. Verfahren gemäß Anspruch 4 oder 5, wobei die Stängel so nebeneinander positioniert werden, dass das Unterlagenende höher positioniert ist als das Edelreisende, wobei das Verfahren weiterhin umfasst:
- Durchschneiden der Stängel auf einem Niveau zwischen dem Unterlagenende und dem Edelreisende und Aufeinanderpositionieren der Stängel der Unterlage und des Edelreises; und
- Bereitstellen eines Pfropfelements um die durchgeschnittenen Stängel herum.

7. Verfahren gemäß Anspruch 6, wobei das Durchschneiden der Stängel mit einem Schneidmesser ausgeführt wird, das die Stängel in einem Winkel zwischen 0° und 60° in einer Richtung im Wesentlichen senkrecht zur Ausrichtung der Stängel schneidet.

8. System zum Verbinden von Pflanzenstängelabschnitten mittels eines Pfropfelements (1) gemäß einem der Ansprüche 1 bis 3, wobei das System umfasst:
- eine Greifvorrichtung (20), die zwei Greifeinheiten (24) umfasst, welche mit ausgedehnten Teilen (31) versehen sind, wobei die Greifeinheiten (24) so angeordnet sind, dass sie das Pfropfelement halten und die Seitenöffnung (3) gegen eine Widerstandskraft des elastischen Materials gezielt öffnen können;
- eine Unterlagenhaltevorrichtung (71) zum Bereitstellen eines Stängels (41) einer zu bepfropfenden Unterlage;
- eine Edelreishaltevorrichtung (72) zum Bereitstellen eines Stängels (42) eines aufzupfropfenden Edelreises; und
- eine Stängelpositioniervorrichtung (45) zum Positionieren der Stängel der Unterlage und des Edelreises in dem Pfropfelement durch Schieben der Stängel durch die Seitenöffnung (3), um die Bildung eines Pfröpflings zu ermöglichen.

9. System gemäß Anspruch 8, wobei die Stängelpositioniervorrichtung eine Schiebeeinheit (51) zum Schieben der Stängel umfasst, wobei die Schiebeeinheit eine Ausrichtung im Wesentlichen senkrecht zur Hauptausrichtung der Stängel aufweist.

10. System gemäß Anspruch 9, wobei die Stängelpositioniereinheit weiterhin eine Presseinheit (52) zum Ausüben von Druck auf die Stängel in einer vorbestimmten Position umfasst, wobei die Presseinheit im Wesentlichen senkrecht zur Schiebeeinheit ausgerichtet und unabhängig von dieser beweglich ist.

11. System gemäß einem der Ansprüche 8 bis 10, wobei der Unterlagenstängel (41) ein Unterlagenende zur Aufnahme des Edelreisstängels (42) umfasst und der Edelreisstängel (42) ein Edelreisende zur Aufnahme des Unterlagenstängels (41) umfasst, wobei das System weiterhin umfasst:
- eine Steuereinheit zum Steuern der Unterlagenhaltevorrichtung (71) und der Edelreishaltevorrichtung (72) zum Nebeneinanderpositionieren der Stängel, so dass das Unterlagenende höher positioniert ist als das Edelreisende; und
- eine Schneideinheit;
wobei die Schneideinheit zum Durchschneiden der Stängel auf einem Niveau zwischen dem Unterlagenende und dem Edelreisende angeordnet ist und wobei die Steuereinheit weiterhin zum Steuern der Unterlagenhaltevorrichtung (71) und der Edelreishaltevorrichtung (72) zum Übereinanderpositionieren der Stängel der Unterlage und des Edelreises nach dem Durchschneiden angeordnet ist.

12. System gemäß Anspruch 11, wobei die Schneideinheit ein Schneidmesser mit einer Ausrichtung in einem Winkel zwischen 0° und 60° in einer Richtung im Wesentlichen senkrecht zur Ausrichtung der durchzuschneidenden Stängel umfasst.

13. Verfahren zur Herstellung des Pfropfelements (1) gemäß einem der Ansprüche 1 bis 3, wobei das Verfahren umfasst:
- Zuführen eines Strangs (11) aus Pfropfelementmaterial;
- Greifen eines Teils des Strangs; und
- Schneiden des Strangs, so dass das Pfropfelement entsteht;
wobei das Greifen durch eine Greifvorrichtung ausgeführt wird, die eine Pfropfelementstützeinheit mit einer Stützfläche zum Stützen des Strangteils und zwei Greifeinheiten, welche mit ausgedehnten Teilen mit einer Form, die zu der der ausgedehnten Elemente des zu bildenden Pfropfelements komplementär ist, versehen sind, umfasst, wobei das Verfahren weiterhin das Voneinanderwegbewegen der ausgedehnten Elemente umfasst, so dass der Strangteil effektiv auf der Stützfläche festgeklemmt wird.

14. System (10) zur Herstellung des Pfropfelements (1) gemäß einem der Ansprüche 1 bis 3, wobei das System umfasst:
- eine Zuführeinheit zum Zuführen eines Strangs (11) aus Pfropfelem entm aterial;
- eine Greifvorrichtung (20) zum Greifen eines Teils des Strangs; und
- eine Schneidvorrichtung (15) zum Schneiden des Strangs, so dass das Pfropfelement entsteht;
wobei die Greifvorrichtung umfasst:
- eine Pfropfelementstützeinheit mit einer Stützfläche zum Stützen des Strangteils; und
- zwei Greifeinheiten (24), die mit ausgedehnten Teilen (31) mit einer Form, die zu der der ausgedehnten Elemente des zu bildenden Pfropfelements komplementär ist, versehen sind;
wobei die Greifeinheiten so angeordnet sind, dass sie die ausgedehnten Elemente voneinanderwegbewegen, so dass der Strangteil effektiv auf der Stützfläche festgeklemmt wird.

15. System gemäß Anspruch 14, wobei die Stützfläche eine konkave Fläche ist, die eine Krümmung aufweist, die kleiner ist als die Krümmung auf der Rückseite des Strangteils.

## Revendications

1. Elément de greffage (1) pour assembler des sections de tige de plante, l'élément de greffage étant réalisé avec un matériau élastique et prenant la forme d'une structure tubulaire ayant un centre creux qui s'étend dans une direction longitudinale de l'élément de greffage afin de former un cylindre (2), l'élément de greffage comprenant en outre :
- une ouverture latérale (3) le long de sa longueur qui est raccordée au centre creux sur toute la longueur de l'élément de greffage ; et
- deux éléments allongés au niveau des côtés opposés de l'ouverture latérale et orientés de manière sensiblement parallèle à cette dernière, les éléments allongés étant prévus avec des découpes ;
dans lequel l'ouverture latérale est expansible sous l'influence des unités de préhension qui se montent dans les découpes.

2. Elément de greffage selon la revendication 1, dans lequel les découpes des éléments allongés prennent la forme de rainures (4a, 4b), les rainures étant de préférence sensiblement en forme de coin.

3. Elément de greffage selon l'une quelconque des revendications précédentes, dans lequel la largeur de l'ouverture latérale à proximité de la surface interne du cylindre est inférieure à la largeur à proximité de la surface externe de l'élément de greffage.

4. Procédé pour assembler des sections de tige de plante au moyen d'un élément de greffage (1) selon l'une quelconque des revendications précédentes, le procédé comprenant les étapes consistant à :
- prévoir un élément de greffage au moyen d'un appareil de préhension (20) comprenant deux unités de préhension (24) prévues avec des portions étendues (31), les unités de préhension (24) étant agencées pour maintenir l'élément de greffage et ouvrir de manière contrôlable l'ouverture latérale (3) contre une force de répulsion du matériau élastique ;
- prévoir une tige (41) d'un porte-greffe à greffer ;
- prévoir une tige (42) d'un greffon à greffer ; et
- positionner les tiges du porte-greffe et du greffon dans l'élément de greffage en poussant les tiges à travers l'ouverture latérale (3) au moyen d'un dispositif de positionnement de tige (45) afin de permettre la formation d'une greffe.

5. Procédé selon la revendication 4, dans lequel le procédé comprend en outre l'étape consistant à maintenir les tiges dans une position prédéterminée en appliquant une pression sur les tiges au moyen du dispositif de positionnement de tige.

6. Procédé selon la revendication 4 ou 5, dans lequel les tiges sont positionnées l'une à côté de l'autre de sorte que l'extrémité du porte-greffe est positionnée plus haut que l'extrémité de greffon, le procédé comprenant en outre les étapes consistant à :
- couper les tiges à un niveau situé entre l'extrémité de porte-greffe et l'extrémité de greffon et positionner les tiges du porte-greffe et du greffon l'une au-dessus de l'autre ; et
- prévoir un élément de greffage autour des tiges coupées.

7. Procédé selon la revendication 6, dans lequel l'étape consistant à couper les tiges est réalisée avec une lame de coupe qui coupe les tiges à un angle compris entre 0° et 60° avec une direction sensiblement perpendiculaire à l'orientation des tiges.

8. Système pour assembler des sections de tige de plante au moyen d'un élément de greffage (1) selon l'une quelconque des revendications 1 à 3, le système comprenant :
- un appareil de préhension (20) comprenant deux unités de préhension (24) prévues avec des portions étendues (31), les unités de préhension (24) étant agencées pour maintenir l'élément de greffage et ouvrir de manière contrôlable l'ouverture latérale (3) contre une force de répulsion du matériau élastique ;
- un appareil de maintien de porte-greffe (71) pour fournir une tige (41) d'un porte-greffe à greffer ;
- un appareil de maintien de greffon (72) pour fournir une tige (42) d'un greffon à greffer ; et
- un dispositif de positionnement de tige (45) pour positionner les tiges du porte-greffe et du greffon dans l'élément de greffage en poussant les tiges à travers l'ouverture latérale (3) afin de permettre la formation d'une greffe.

9. Système selon la revendication 8, dans lequel le dispositif de positionnement de tige comprend une unité de poussée (51) pour pousser les tiges, l'unité de poussée ayant une orientation sensiblement perpendiculaire à l'orientation principale des tiges.

10. Système selon la revendication 9, dans lequel l'unité de positionnement de tige comprend en outre une unité de pression (52) pour appliquer une pression sur les tiges dans une position prédéterminée, dans lequel l'unité de pression est orientée de manière sensiblement perpendiculaire à l'unité de poussée et de manière indépendamment mobile par rapport à cette dernière.

11. Système selon l'une quelconque des revendications 8 à 10, dans lequel la tige de porte-greffe (41) comprend une extrémité de porte-greffe pour recevoir la tige de greffon (42), et la tige de greffon (42) comprend une extrémité de greffon pour recevoir la tige de porte-greffe (41), le système comprenant en outre :
- une unité de commande pour commander l'appareil de maintien de porte-greffe (71) et l'appareil de maintien de greffon (72) afin de positionner les tiges l'une à côté de l'autre de sorte que l'extrémité de porte-greffe est positionnée plus haut que l'extrémité de greffon ; et
- une unité de coupe ;
dans lequel l'unité de coupe est agencée pour couper les tiges à un niveau situé entre l'extrémité de porte-greffe et l'extrémité de greffon et dans lequel l'unité de commande est en outre agencée pour commander l'appareil de maintien de porte-greffe (71) et l'appareil de maintien de greffon (72) afin de positionner les tiges du porte-greffe et du greffon l'une au-dessus de l'autre, après la coupe.

12. Système selon la revendication 11, dans lequel l'unité de coupe comprend une lame de coupe avec une orientation à un angle compris entre 0° et 60° avec une direction sensiblement perpendiculaire à l'orientation des tiges à couper.

13. Procédé pour préparer l'élément de greffage (1) selon l'une quelconque des revendications 1 à 3, le procédé comprenant les étapes consistant à :
- fournir un brin (11) de matériau d'élément de greffage ;
- saisir une portion du brin ; et
- couper le brin de sorte que l'élément de greffage est formé,
dans lequel l'étape de préhension est réalisée par un appareil de préhension comprenant une unité de support d'élément de greffage ayant une surface de support pour supporter la portion de brin, et deux unités de préhension prévues avec des portions étendues avec une forme complémentaire aux éléments allongés de l'élément de greffage à former, dans lequel le procédé comprend en outre l'étape consistant à éloigner les éléments allongés les uns des autres de sorte que la portion de brin est efficacement bloquée sur la surface de support.

14. Système (10) pour préparer l'élément de greffage (1) selon l'une quelconque des revendications 1 à 3, le système comprenant :
- une unité d'alimentation pour fournir un brin (11) de matériau d'élément de greffage ;
- un appareil de préhension (20) pour saisir une portion du brin ; et
- un dispositif de coupe (15) pour couper le brin de sorte que l'élément de greffage est formé, dans lequel l'appareil de préhension comprend :
- une unité de support d'élément de greffage ayant une surface de support pour supporter la portion de brin ; et
- deux unités de préhension (24) prévues avec des portions étendues (31) avec une forme complémentaire aux éléments allongés de l'élément de greffage à former ;
dans lequel les unités de préhension sont agencées pour éloigner les éléments allongés les uns des autres de sorte que la portion de brin est efficacement bloquée sur la surface de support.

15. Système selon la revendication 14, dans lequel la surface de support est une surface concave ayant une courbure qui est inférieure à la courbure du côté arrière de la portion de brin.
